# EUROPÄISCHE PATENTSCHRIFT

(11) **EP 2 729 430 B1**
(45) Veröffentlichungstag und Bekanntmachung des Hinweises auf die Patenterteilung: **12.08.2020**
(21) Anmeldenummer: 12748525.8
(22) Anmeldetag: 09.07.2012
(51) Int. Cl.: C04B 28/04, C04B 40/00

(54) **HYDRAULISCHES BINDEMITTEL**
HYDRAULIC BINDER
LIANT HYDRAULIQUE

(30) Priorität: 08.07.2011 AT 10052011
(43) Veröffentlichungstag der Anmeldung: 14.05.2014
(73) Patentinhaber: Holcim Technology Ltd, 8645 Rapperswil-Jona (CH)
(72) Erfinder: MATTHES, Winnie, CH-5000 Aarau (CH); CASTELLTORT, Zarina, CH-1180 Rolle (CH); MATSCHEI, Thomas, CH-5600 Lenzburg (CH); BAALBAKI, Moussa, CH-5103 Möriken (CH)
(74) Vertreter: Keschmann, Marc
(86) Internationale Anmeldenummer: PCT/IB2012/001357
(87) Internationale Veröffentlichungsnummer: WO 2013/008082

(56) Entgegenhaltungen:
- JP-A- 8 143 348
- US-A1- 2005 241 537
- US-A1- 2008 156 491
- US-A1- 2009 188 409
- US-B1- 6 827 776
- ZONGSHOU, L. ET AL: "Manufacture of high-strength high slag cement", CHEMICAL ABSTRACTS, CHEMICAL ABSTRACTS SERVICE (C A S), US, Bd. 119, Nr. 12, 13. Dezember 1993 (1993-12-13), Seite 386, XP000408131, ISSN: 0009-2258 & CN 1 071 902 A (UNIV WUHAN POLYTECHNIC [CN]) 12. Mai 1993 (1993-05-12)
- MASUDA, Y.: "High-sulfate slag cement", CHEMICAL ABSTRACTS, Bd. 94, Nr. 8, 23. Februar 1981 (1981-02-23), Seite 294, XP000184421, ISSN: 0009-2258
- DENKI KAGAKU KOGYO: "Binders for mortars and concretes", CHEMICAL ABSTRACTS, Bd. 100, Nr. 10, 5. März 1984 (1984-03-05) , Seite 297, XP000184498, ISSN: 0009-2258

## Beschreibung

Die Erfindung betrifft ein hydraulisches Bindemittel gemäß Anspruch 1 Die Erfindung betrifft weiters ein Aktivierungssystem gemäß Anspruch 10 sowie eine Fertigbetonmischung enthaltend das hydraulische Bindemittel gemäß Anspruch 15 und ein Formteil gemäß Anspruch 16 hergestellt unter Verwendung des hydraulischen Bindemittels oder des Aktivierungssystems.

Die US2008/156491A1 offenbart Zusammensetzungen umfassend 25 bis 75 Gew.-% Portlandzement in Kombination mit 75 bis 25 Gew.-% Zementofenstaub, sowie 4 Gew.-% Calciumchlorid als Beschleuniger und 0.25 bis 0.5 Gew.-% Weinsäure als Verzögerer.

Das US6827776B1 offenbart eine Mischung umfassend wenigstens eine Alkaliverbindung wie Kaliumhydroxid sowie eine verzögernde Komponente, die zu einer Mischung von Flugasche und Portlandzement zugegeben wird.

Die Publikation "Manufacture of high-strength high slag cement" von Zongshou, L. et al (1993) offenbart eine aktivierte zementäre Bindemittelmischungen umfassend sulfatierten Portlandzement und mineralische Zumischstoffe.

Die Publikation "Binders for mortars and concretes" von Denki Kagaku Kogyo (1984) beschreibt ein alkali-aktiviertes und verzögertes Schlackebindemittel.
Beton ist ein sehr weitverbreitetes Baumaterial mit hoher Festigkeit und guter Dauerhaftigkeit. Neben Zuschlägen und Wasser enthält er als hydraulisches Bindemittel Portland-Zement, der durch Erstarren und Aushärten in Kontakt mit Wasser festigkeitsbildende Phasen entwickelt. Damit ist Beton auf Basis von Portland-Zementklinker weltweit eines der wichtigsten Bindemittel.

Zemente auf der Basis von Portlandzementklinker enthalten Kalziumsulfat (CaSO₄), um das Abbinden und Aushärten zu steuern. Kalziumsulfat reagiert mit den aluminatischen Klinkerphasen zunächst zu Ettringit. Nach Verbrauch des Kalziumsulfats und in Abwesenheit von Karbonat, Nitrat, Chlorid etc, wandelt sich der gebildete Ettringit allmählich zu Hydratphasen mit geringerem Sulfatanteil um. Als Kalziumsulfatquelle kommen hierbei Gips, Halbhydrat, Anhydrit oder Mischungen zweier oder mehrer dieser Materialien in Frage.

Setzt man dem Portlandzement verschiedene Zusatzstoffe zu wie z.B. Hüttensand, Flugasche, natürliche Puzzolane, kalzinierte Tone oder gemahlenen Kalkstein, lassen sich Portland-Kompositzemente mit unterschiedlichen Eigenschaften herstellen. Gleichzeitig lässt sich durch diesen Ersatz des Portlandzements durch die genannten Zusatzstoffe der spezifische CO₂-Ausstoss bei der Herstellung des Zements verringern, denn bei der Herstellung von Portlandzementklinker werden durch Kalzinierung der Rohmaterialien und aus der Oxidation der Brennstoffe im Drehrohrofen etwa 0,9 Tonnen CO₂ pro Tonne Portlandzementklinker emittiert. Die Zugabe von Zusatzstoffen zu Portlandzement ist seit über 100 Jahren gängige Praxis und ist in zahlreichen Zement- und Betonstandards geregelt. Die Substitution des Portlandzementklinkers mit Zusatzstoffen im Zement bzw. im Beton geht jedoch eine Verminderung der Festigkeit, vor allem der Frühfestigkeit, einher, so dass Maßnahmen getroffen werden müssen, um trotz des gewünschten verminderten Gehalts an Portlandzement-Klinker ausreichende Festigkeiten zu erreichen.

Eine dieser Maßnahmen ist die chemische Aktivierung, beispielsweise durch Alkaliverbindungen. Portlandzemente mit mineralischen Zusatzstoffen wie z.B. Hüttensand oder Flugasche zeigen bei alkalischer Anregung bzw. Aktivierung erhöhte Festigkeiten. Gleichzeitig aber wird die Verarbeitbarkeit des Mörtels oder Betons deutlich herabgesetzt. Ein Portlandhütten- oder Hochofenzement mit der Bezeichnung CEM III nach EN 197, dem ein Alkali-Akivator zugemischt ist, ist beispielsweise der WO 2007/039694 A2 zu entnehmen. Nachteilig sind bei einem solchen Zement jedoch die verringerte Endfestigkeit und die kurze Verarbeitungszeit, da der Beton sehr früh abbindet. Beispielsweise führt eine Säure-Base Aktivierung mit einem kontrollierten pH-Wert, wie in US 6,827,776 B1 und US 6,740,155 B1 beschrieben, zu einem sehr schnellen Abbinden und Aushärten von Flugasche-Kompositzementen mit einer initialen Abbindezeit von bis zu 38 Minuten und einer finalen Abbindezeit von bis zu 46 Minuten.

Im Gegensatz zur Aktivierung von Portlandzement mit Kalk- und Alkaliverbindungen beschreibt die WO 92/06048 eine andere Aktivierungsstrategie für Hüttensand-Kompositzemente mit weniger als 30 Gew.-% Portlandzement basierend auf einer Kombination von Magnesiumoxid und Phosphaten. Der resultierende Beton ist als feuerfest ausgewiesen. Die Formulierungen haben eine sehr geringe Frühfestigkeit, wenn nicht eine geringe Menge einer Alkaliverbindung zusammen mit Kalk, amorphem Silizium und einem Plastifizierer zugegeben wird.

US 5,490,889 zeigt, wie die Verarbeitungszeit bzw. die Verarbeitbarkeit und Festigkeitsentwicklung von gemischten hydraulischen Zusammensetzungen durch die verzögerte Zugabe des Aktivators zusammen mit einer sorgfältigen Einstellung der Zugabe von 5 bis 9 verschiedenen Zementbestandteilen gesteuert werden kann. Die hydraulische Zusammensetzung enthält 15 bis 22 Gew.-% Wasser, 50 bis 83 Gew.-% kalkreiche Flugasche (Klasse C gemäß ASTM C618) und 5 bis 23 Gew.-% Zementmaterialien, umfassend Portlandzement, gemahlene granulierte Hochofenschlacke, im Folgenden als Hüttensand bezeichnet, und optional gemahlenes Silizium, wobei diese Gesamtheit durch eine Kombination von Zitronensäure und einem Alkalimetallaktivator mit Borsäure und/oder Borax aktiviert wird. Gemäß diesem Stand der Technik ist die Verarbeitungszeit zwischen einigen wenigen Minuten und mehr als hundert Stunden im Wesentlichen durch die verzögerte Zugabe des Aktivators Zitronensäure und Alkalimetallaktivator steuerbar. Wenn bei Wasser/Zementverhältnissen von unter 0,25 gearbeitet wurde, wurde eine gute Festigkeit der untersuchten Mörtel berichtet. Jedoch muss aufgrund der Komplexität der Formulierung bezweifelt werden, dass diese Werte bei einem Beton unter praktischen Anwendungsbedingungen mit variierender Temperatur, unterschiedlichen Zuschlagsqualitäten u.s.w. erzielt werden können.

Die vorliegende Erfindung zielt darauf ab, wiederholbar eine signifikante Verbesserung der Festigkeit, insbesondere in frühen Phasen zu erreichen, während die Verarbeitbarkeit bzw. die Verarbeitungszeit gegenüber unaktiviertem Vergleichszement mindestens aufrecht erhalten werden soll.

Zur Lösung dieser Aufgabe besteht die Erfindung ausgehend von einem hydraulischen Bindemittel der eingangs genannten Art im wesentlichen darin, dass 1 bis 10 Gew.-% eines dualen Abbindesteuerungssystems enthalten sind, das einen Aktivator und einen Abbindeverzögerer umfasst, wobei das Gewichtsverhältnis von Aktivator zu Verzögerer, bezogen auf die Trockensubstanz, größer als 85:15, insbesondere größer als 90:10, insbesondere größer als 95:5, insbesondere größer als 98:2 gewählt ist, wobei der Aktivator wenigstens ein Alkalimetallsulphat, insbesondere Na-, K- oder Li-Sulphat, umfasst. Die Anmelderin hat hierbei überraschend gefunden, dass geringere Anteile von Zementklinker durch den Einsatz des erfindungsgemäßen dualen Abbindesteuerungssystems hinsichtlich der Festigkeit in frühen und späten Phasen des Abbindens und Aushärtens zumindest kompensiert werden können. Dabei werden bei Einhaltung der beanspruchten Verhältnisse die herkömmlichen Vorteile des Aktivators mit denen des Verzögerers verbunden. Der Aktivator, in den Beispielen vorwiegend Na₂SO₄, beschleunigt die Hydratationsreaktionen sowohl von Klinker als auch von sekundären Zementmaterialien signifikant. Folglich steigt die Frühfestigkeit der beschleunigten Kompositzemente am Tag 1 und 2 des Abbindens signifikant. Dies geht beim Stand der Technik jedoch auf Kosten der Spätfestigkeitsentwicklung nach 28 Tagen. Erfindungsgemäß verhindert die kombinierte Zugabe eines Aktivators und eines Verzögerers diesen oft beobachteten Spätfestigkeitsverlust ohne den Effekt bei der frühen Aktivierung zu beeinflussen. Zusätzlich wird die Verarbeitbarkeit des Zements im Mörtel und Beton signifikant verbessert.

Kalorimetrische Messungen zusammen mit thermodynamischen Berechnungen zeigen, dass das kombinierte Aktivierungssystem, bestehend aus einem Verzögerer und einem Aktivator, den Hydratationsgrad von Tag 1 des Abbindens an verbessert. Obwohl das erfindungsgemäß kombinierte Aktivierungssystem im Vergleich zu bekannten aktivierten Systemen einen relativ geringen Hydratationsgrad an Tag 1 des Abbindens hat, ist die Frühfestigkeitsentwicklung dieser beiden Systeme vergleichbar und signifikant höher als jene des unaktivierten Systems.

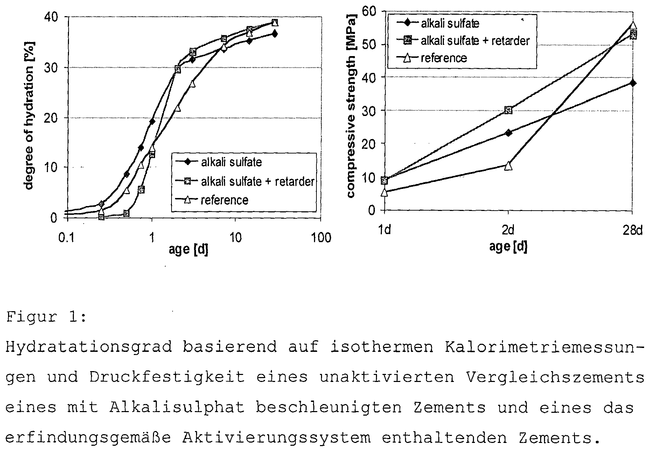

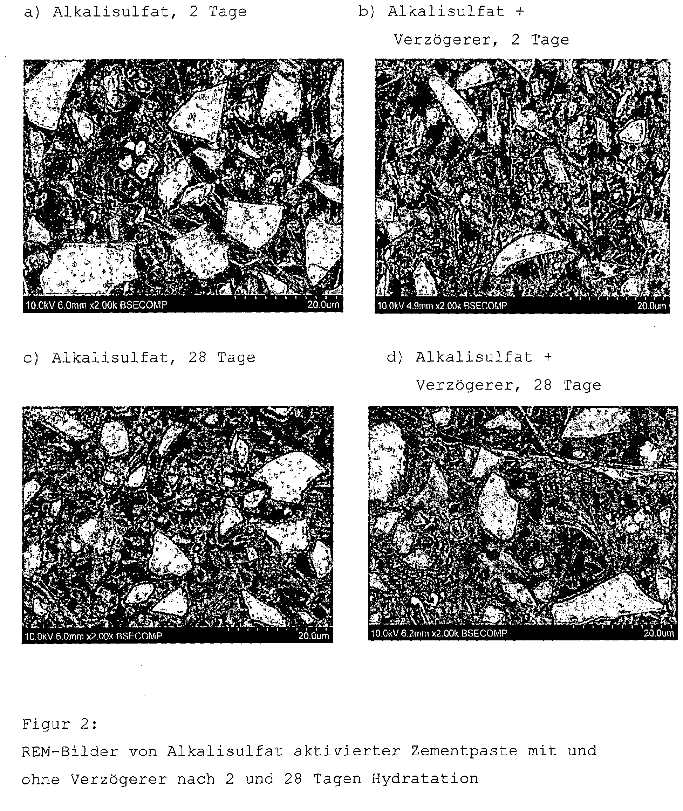

REM (Rasterelektronenmikroskop) Bilder (siehe Fig. 2) zeigen, dass sich aufgrund der gemeinsamen Zugabe eines Aktivators (hier z.B. Na₂SO₄ ) und eines Verzögerers (hier z.B. Na-Gluconat) eine dichtere Mikrostruktur entwickelt, die das mechanische Verhalten des kombinierten Aktivierungssystems verbessert. Die ab einem Tag Hydratationszeit auf Basis des chemisch gebundenen Wassers berechneten höheren Volumenanteile der Reaktionsprodukte Calcium-Silikat-Hydrat und Ettringit in Zementen mit kombiniertem Aktivierungssystem, stimmen mit diesen Beobachtungen überein.

Auf Grund der Anwesenheit eines Verzögerers kann das duale Abbindesteuerungssystem insgesamt in höheren Mengen im Verhältnis zur Gesamtmischung des Zements eingesetzt werden. Während die Verwendung von Aktivatoren bisher in Mengen bis zu ca. 1 Gew.-%, bezogen auf das Gewicht des hydraulischen Bindemittels, erfolgte, können auf Grund der Kombination mit dem Verzögerer Mengen von bis zu 10 Gew.% eingesetzt und die Festigkeit dementsprechend gesteigert werden. Bevorzugt wird das duale Abbindesteuerungssystem in Mengen von 1 bis 7 Gew.-%, insbesondere 2 bis 3 Gew.-%, bezogen auf das hydraulische Bindemittel, eingesetzt.

Bevorzugt umfasst der Aktivator in Kombination mit der wenigstens einen der zuvor genannten Verbindungen weiters wenigstens eine Verbindung ausgewählt aus der Gruppe bestehend aus Polyalkoholen, insbesondere Triethanolamin oder Triisopropanolamin, Glycerin oder Glycolderivaten. Bevorzugt ist der Aktivator in Mengen von 1 bis 6 Gew.-%, insbesondere 2 bis 4 Gew.-%, bezogen auf das hydraulische Bindemittel, eingesetzt. Besonders bevorzugt ist die Verwendung von Na₂SO₄ als Aktivator. Durch diesen Aktivator wird die Bildung von Ettringit verstärkt, was durch ein erhöhtes Wasserbindevermögen zu einer geringeren Porosität führt.

Der Verzögerer umfasst erfindungsgemäß wenigstens eine Verbindung ausgewählt aus der Gruppe bestehend aus Zn- und Bleisalzen, Phosphaten, Phosphonaten, insbesondere Phosphonobutantricarbonsäure, Aminomethylenphosphonate, insbesondere Aminotrismethylenphosphonat, Borsäuren, Silicofluoriden, organischen Säuren insbesondere Hydroxycarbonsäuren, insbesondere Gluconsäure, Weinsäure und deren Salzen, Zucker und deren Derivate.

Die Zucker können hierbei Mono-, Di- und Oligosaccharide sein. Unter den Zuckerderivaten sind insbesondere Zuckeralkohole wie beispielsweise Sorbitol zu verstehen. Besonders bevorzugt ist der Einsatz eines Alkalimetall- und/oder Erdalkalimetallsalzes der Gluconsäure, insbesondere Na-Gluconat als Verzögerer. Der Verzögerer wird bevorzugt in einer Menge von 0,01 - 0,5 Gew.-%, insbesondere 0,03 - 0,06 Gew.-%, bezogen auf das hydraulische Bindemittel, eingesetzt.

Wie bereits eingangs erwähnt, werden bei hydraulischen Bindemitteln auf Zementklinkerbasis, bei denen der Klinkerfaktor reduziert ist, mineralische Zusatzstoffe eingesetzt, um den reduzierten Anteil von Portlandzementklinker auszugleichen. Im Rahmen der vorliegenden Erfindung sind dies bevorzugt Hüttensand, Flugasche, natürliche Puzzolane, gebrannte Tone, gemahlener Kalkstein oder Kombinationen davon. Besonders bevorzugt ist die Kombination von Hüttensand und Kalkstein. Erfindungsgemäß sind die mineralischen Zusatzstoffe in Mengen von 15 bis 75 Gew.-%, bezogen auf das hydraulische Bindemittel, enthalten. Werden Flugasche oder natürliche Puzzolane als Zusatzstoffe eingesetzt, können bevorzugt zusätzlich reaktive Tone, insbesondere Metakaolin in Mengen von 1 bis 15 Gew.-%, bezogen auf das hydraulische Bindemittel enthalten sein, um die Festigkeitsentwicklung weiter zu steigern bzw. um eine weitere Reduktion des Klinkergehaltes zu ermöglichen.

Bei den erfindungsgemäßen hydraulischen Bindemitteln handelt es sich um Zemente der Gruppen CEM II/A,B, CEM III/A,B, CEM IV/A,B und CEM V/A,B gemäß EN 197-1 sowie um Zusammensetzungen, die in der EN 197-1 nicht enthalten sind wie zum Beispiel um einen Zement mit 65 Gew.-% Hüttensand und 10 Gew.-% Kalkstein oder um eine CEM V-Zusammensetzung mit 10 Gew.-% Kalkstein. Grundsätzlich bewegt sich der Gehalt an mineralischen Zusatzstoffen im Bereich von 15 bis 75 Gew.-%. Das heißt, dass der Klinkergehalt von 25 bis 85 Gew.-% variieren kann. Der Anteil mineralischer Zusatzstoffe, insbesondere puzzolanischer Komponenten wie silicareicher Flugaschen, natürlicher Puzzolane oder gebrannter Tone liegt dabei im Bereich bis 70 Gew.-%, Kalkstein kann als mineralischer Zusatzstoff in Mengen von 15 bis 50 Gew.-% enthalten sein und latent hydraulische Materialien wie Hüttensand oder kalkreiche Flugaschen im Bereich 15 bis 75 Gew.-%.

Das erfindungsgemäße Aktivierungssystem zeichnet sich durch ein duales Abbindesteuerungssystem aus, mit einem Aktivator und einen Verzögerer, wobei das Verhältnis von Aktivator zu Verzögerer größer als 85:15, insbesondere größer als 90:10, insbesondere größer als 95:5, insbesondere größer als 98:2 gewählt ist, wobei der Aktivator wenigstens ein Alkalimetall-Sulphat, insbesondere Na-, K- oder Li-Sulphat, umfasst und der Verzögerer wenigstens eine Verbindung umfasst, ausgewählt aus der Gruppe bestehend aus Zn- und Bleisalzen, Phosphaten, Phosphonaten wie z.B.: Phosphonobutantricarbonsäure, Aminomethylenphosphonate (z.B. Aminotrismethylenphosphonat), Borsäuren, Silicofluoriden, organischen Säuren insbesondere Hydroxycarbonsäuren wie z.B. Gluconsäure, Weinsäure und deren Salze, Zucker und deren Derivate. Bezüglich der vorteilhaften Ausführungsformen wird auf die obigen Ausführungen in Bezug auf das hydraulische Bindemittel verwiesen. Das Aktivierungssystem liegt entweder als Bestandteil des hydraulischen Bindemittels vor, oder kann erst bei Anmischung des Betons oder Mörtels zugegeben werden.

Das erfindungsgemäße hydraulische Bindemittel bzw. das erfindungsgemäße Aktivierungssystem kann zu einer Fertigbetonmischung weiterverarbeitet werden.

Die vorliegende Erfindung wird anhand der nachfolgenden Ausführungsbeispiele näher erläutert.

### Beispiel 1

Verschiedene Kompositzemente wurden in Mörteln enthaltend 450 g Zement und 1350 g EN Standardsand verwendet. Das Wasser/Zementverhältnis wechselte. Tabelle 1 enthält die Ergebnisse für die Druckfestigkeit dieser Mörtel im Vergleich zu unaktivierten Vergleichszementen, Zementen mit einem Aktivator, Zementen mit einem Verzögerer und Zementen enthaltend das erfindungsgemäße kombinierte Aktivierungssystem.

**Tabelle 1:**

| Mörtel, 20°C | Aktivator | Aktivator Gew. - % | Verzögerer | Verzögerer Gew. - % | w/c | Druckfestigkeit, MPa | | |
|---|---|---|---|---|---|---|---|---|
| | | | | | | 1d | 2d | 28d |
| A)57,4 Gew.-% Klinker, 38.3 Gew.-% Silica-Flugasche, 4.3 Gew.-% Gips | | | | | | | | |
| Vergleich | - | 0 | | 0 | 0.40 | 14.0 | 25,1 | 50,2 |
| Beschleunigt | Na-Sulfat | 3.0 | - | 0 | 0.40 | 16.1 | 22.6 | 54.5 |
| Erfindungsgemäß aktiviert | Na-Sulfat | 3.0 | Na-Gluconat | 0.05 | 0.40 | 18.4 | 32.4 | 63.7 |

| B) 55.1 Gew.-% Klinker, 36.7 Gew.-% Silica-Flugasche, 4.1 Gew.-% Metakaolin, 4.1 Gew.-% Gips | | | | | | | | |
|---|---|---|---|---|---|---|---|---|
| Beschleunigt | Na-Sulfat | 3.0 | - | 0 | 0.40 | 18.9 | 29.0 | 57.9 |
| Erfindungsgemäß aktiviert | Na-Sulfat | 3.0 | Na-Gluconat | 0,02 5 | 0.40 | 20.8 | 34.8 | 57.0 |

| C)57,4 Gew.-% Klinker, 38.3 Gew.-% Silica-Flugasche, 4.3 Gew.-% Gips | | | | | | | | |
|---|---|---|---|---|---|---|---|---|
| Vergleich | - | 0 | - | 0 | 0.45 | 9.7 | 19.6 | 45.6 |
| Aktiviert I | Glauberit | 4.8 | Na-Gluconat | 0.05 | 0.45 | 12.4 | 25.1 | 49.1 |
| Aktiviert II | Glauberit | 4.8 | Zitronensäure | 0.07 | 0.45 | 10.5 | 23.2 | 47.6 |
| Aktiviert III | Glauberit | 4.8 | Bayhibit | 0.07 | 0.45 | 11.8 | 23.4 | 45.8 |

| D)28.7 Gew.-% Klinker, 66.8 Gew.-% Hüttensand , 4.5 Gew.-% Gips | | | | | | | | |
|---|---|---|---|---|---|---|---|---|
| Vergleich | - | 0 | - | 0 | | 3.2 | 7.5 | 50.9 |
| Beschleunigt | Na-Sulfat | 3.0 | - | 0 | | 4.2 | 7.2 | 48.3 |
| Verzögert | - | 0 | Na-Gluconat | 0,05 | | 1.6 | 7.0 | 58.7 |
| Erfindungsgemäß aktiviert | Na-Sulfat | 3.0 | Na-Gluconat | 0,05 | | 4.5 | 10.8 | 58.2 |

| E)28.7 Gew.-% Klinker, 66.8 Gew.-% Hüttensand, 4.5 Gew.-% Gips | | | | | | | | |
|---|---|---|---|---|---|---|---|---|
| Vergleich | - | 0 | - | 0 | 0.45 | 3.8 | 10.5 | 57.8 |
| Aktiviert I | Glauberit | 4.8 | Na-Gluconat | 0.05 | 0.45 | 5.7 | 17.6 | 58.3 |
| Aktiviert II | Glauberit | 4.8 | Zitronensäure | 0.07 | 0.45 | 4.2 | 14.8 | 58.8 |
| Aktiviert III | Glauberit | 4.8 | Bayhibit | 0.07 | 0.45 | 5.1 | 15.4 | 56.0 |

| F) 70 Gew.-% Klinker, 25.5 Gew.-% gemahlener Kalkstein (LS), 4.5 Gew.-% Gips | | | | | | | | |
|---|---|---|---|---|---|---|---|---|
| Vergleich | - | 0 | - | 0 | 0.50 | 11.3 | 21.0 | 44.7 |
| Erfindungsgemäß aktiviert | Na-Sulfat | 3.0 | Na-Gluconat | 0,05 | 0.50 | 17.4 | 31.7 | 46.1 |

| G) 29 Gew.-% Klinker, 38 bis 57 Gew.-% Hüttensand (gbfs), 10 bis 30 Gew.-% LS, 4.3 Gew.-% Gips | | | | | | | | |
|---|---|---|---|---|---|---|---|---|
| Vergleich: 60% gbfs, 10% LS | - | 0 | - | 0 | 0.45 | na | 14.0 | 57.0 |
| Aktiviert: 60% gbfs, 10% LS | Na-Sulfat | 3.0 | Na-Gluconat | 0,05 | 0.45 | na | 20.7 | 63.5 |
| Vergleich. 40% gbfs, 30% LS | - | 0 | - | 0 | 0.45 | na | 12.1 | 48.8 |
| Aktiviert: 40% gbfs, 30% LS | Na-Sulfat | 3.0 | Na-Gluconat | 0,05 | 0.45 | na | 18.6 | 53.3 |

| H) 28.7 Gew.-% Klinker, 66.8 Gew.-% Hüttensand, 4.5 Gew.-% Gips | | | | | | | | |
|---|---|---|---|---|---|---|---|---|
| Vergleich | - | 0 | - | 0 | 0.45 | 4.4 | 9.1 | 64.7 |
| Beschleunigt | Ca-Nitrat | 3.0 | - | 0 | 0.45 | 4.5 | 12.7 | 63.3 |
| Erfindungsgemäß aktiviert | Ca-Nitrat | 3.0 | Na-Gluconat | 0,05 | 0.45 | 4.2 | 12.7 | 71.3 |
| Beschleunigt | Ca-Nitrit | 3.0 | - | 0 | 0.45 | 5.1 | 12.3 | 73.1 |
| Erfindungsgemäß aktiviert | Ca-Nitrit | 3.0 | Na-Gluconat | 0,05 | 0.45 | 5.3 | 13.5 | 80.7 |

| I) 57,4 Gew.-% Klinker, 38.3 Gew.-% natürliches Puzzolan (vulkanischer Tuff), 4.3 Gew.-% Gips | | | | | | | | |
|---|---|---|---|---|---|---|---|---|
| Vergleich | - | 0 | - | 0 | 0.45 | 10.9 | 19.8 | 44.2 |
| Beschleunigt | Na-Sulfat | 3.0 | - | 0 | 0.45 | 15.9 | 23.4 | 39.4 |
| Erfindungsgemäß aktiviert | Na-Sulfat | 3.0 | Na-Gluconat | 0,05 | 0.45 | 17.6 | 26.8 | 42.9 |
| K) 55.1 Gew.-% Klinker, 36.7 Gew.-% natürliches Puzzolan (vulkanischer Tuff), 4.1 Gew.-% Metakaolin, 4.1 Gew.-% Gips | | | | | | | | |
| vergleich | - | 0 | - | 0 | 0.45 | 11.2 | 20.1 | 48.1 |
| Beschleunigt | Na-Sulfat | 3.0 | - | 0 | 0.45 | 17.8 | 26.2 | 44.5 |
| Erfindungsgemäß aktiviert | Na-Sulfat | 3.0 | Na-Gluconat | 0,05 | 0.45 | 19.9 | 26.9 | 43.9 |

| L) 95.7% Klinker, 4.3% Gips | | | | | | | | |
|---|---|---|---|---|---|---|---|---|
| Vergleich | - | 0 | - | 0 | 0.50 | 21.8 | 35.2 | 60.5 |
| Beschleunigt | Na-Sulfat | 3.0 | - | 0 | 0.50 | 30.0 | 41.0 | 61.5 |
| Erfindungsgemäß aktiviert | Na-Sulfat | 3.0 | Na-Gluconat | 0,05 | 0.50 | 33.3 | 45.6 | 65.6 |

Die Ergebnisse der Systeme A) bis C) zeigen die Wirksamkeit des erfindungsgemäßen kombinierten Aktivierungssystems enthaltend Na-Sulfat und Glauberit (Na₂Ca(SO)₂) als Beispiele für Aktivatoren, kombiniert mit verschiedenen Verzögerern bei der Verbesserung der Festigkeit von Kompositzementen enthaltend puzzolanische Materialien wie beispielsweise Silica-Flugasche in erhöhten Mengen und optional Metakaolin. Der positive Effekt der Kombination von Aktivator und Verzögerer gegenüber der alleinigen Zugabe eines Aktivators ist klar gezeigt.

Die Systeme D) bis E) zeigen den signifikanten Anstieg der Festigkeit von Mörteln mit Kompositzementen enthaltend größere Mengen von Hüttensand und exemplarischen Kombinationen von Aktivatoren und Verzögerern entsprechend der vorliegenden Erfindung. Auch hier führt die Kombination von Aktivator und Verzögerer zu einer signifikant höheren Festigkeitsentwicklung in allen Stadien, verglichen mit einer Zugabe des Aktivators oder Retarders alleine.

Die Wirksamkeit des Aktivierungssystems hängt eindeutig von der Qualität der Zementbestandteile ab. Das Ansprechen auf die Aktivierung hängt von deren Reaktivität und chemischer Zusammensetzung ab. Diese Beispiele verdeutlichen die Rolle des Aktivators, jene des Verzögerers und jene der kombinierten Zugabe entsprechend der vorliegenden Erfindung. Während die Zugabe von Aktivator vor allem die Frühfestigkeit erhöht und die Spätfestigkeit in Abhängigkeit der Eigenschaften des Hüttensandes und des Klinkers eher mehr oder weniger senkt, führt die Zugabe des Verzögerers alleine zum Gegenteil, nämlich einer Verringerung der Frühfestigkeit, jedoch zu einer Erhöhung der Spätfestigkeit. Nur die erfindungsgemäße Kombination von beiden Komponenten bringt gute Ergebnisse in allen Stadien.

System F) zeigt die Wirksamkeit des kombinierten Aktivierungssystems entsprechend der vorliegenden Erfindung, wenn diese auf Kalkstein-Kompositzemente angewandt wird. Überraschenderweise wird auch in Gegenwart von erhöhten Mengen des vorwiegend inerten Kalksteins eine Aktivierung des Kompositzements durch die Zugabe des erfindungsgemäßen Aktivierungssystems erreicht, was zu einer wesentlichen Festigkeitszunahme in allen Stadien führt.

System G) zeigt den Effekt des kombinierten Aktivierungssystems, wenn dieses in ternären Kompositzementen verwendet wird. In herkömmlichen Kompositzementen würde das Ersetzen des reaktiven Hüttensandes durch den vorwiegend inerten Kalkstein zu einer Verringerung der Festigkeit in allen Stadien proportional zur Menge der ersetzten Menge des Hüttensandes führen. Dies wird durch die Daten der verschiedenen unaktivierten Vergleichszemente bestätigt. Wenn das kombinierte Aktivierungssystem gemäß der vorliegenden Erfindung angewendet wird, wird die Verringerung der Frühfestigkeit, die durch das Ersetzen des reaktiven Hüttensandes durch den im Wesentlichen unreaktiven Kalkstein verursacht wurde, mehr als ausgeglichen. Auch die Spätfestigkeit ist signifikant erhöht.

System H) - es betrifft nicht das erfindungsgemäße Bindemittel - verdeutlicht die Wirksamkeit der Zugabe von Verzögerer zu einem Hüttensand-Kompositsystem, welches durch Ca-Nitrat und Ca-Nitrit aktiviert ist. In beiden Systemen wurde die Spätfestigkeit durch die Zugabe des Verzögerers signifikant verbessert, ohne die Frühfestigkeit zu beeinträchtigen.

Die Systeme I) und K) enthalten Beispiele von Puzzolankompositzementen mit einer erhöhten Menge von vulkanischem Tuff. Das System K) enthält zusätzlich geringe Mengen and Metakaolin. Die Aktivierung mit Na-Sulfat führt zu einem signifikanten Ansteigen der Frühfestigkeit auf Kosten der Festigkeit nach 28 Tagen. Die Zugabe des Verzögerers steigert die Frühfestigkeit weiter und reduziert zum Teil den Festigkeitsverlust im späteren Stadium.

Das System L) illustriert die Wirksamkeit eines nicht beanspruchten Aktivierungssystems mit herkömmlichem Portlandzement ohne sekundäre Zementmaterialien. Die kombinierte Zugabe von Aktivator und Verzögerer erhöht die Festigkeit in allen Stadien verglichen mit dem System, welches nur einen Aktivator enthält.

In Zusammenfassung der in Tabelle 1 angegebenen Beispiele ist das neue kombinierte Aktivierungssystem, wie es in dieser Anmeldung beansprucht wird, wirksam bei der signifikanten Steigerung der Mörtelfestigkeit von Kompositzementen auf Basis von Flugasche, Hüttensand, Puzzolan und Kombinationen davon. Die Kombination von Aktivator und Verzögerer überflügelt die Leistung der unaktivierten Vergleichssysteme und jene von Zementen, die entweder den Aktivator oder den Verzögerer allein enthalten. Somit kann in einem aktivierten Kompositzement oder herkömmlichen Portlandzement entsprechend der Erfindung eine signifikant höhere Festigkeit bei konstantem Klinkergehalt erreicht werden oder der Klinkergehalt kann signifikant reduziert werden und gleichzeitig ein vergleichbares Festigkeitsniveau aufrecht erhalten werden.

### Beispiel 2:

In Beispiel 2 wurde ein Zement gemäss System D) in Beton der folgenden Zusammensetzung getestet:
380 kg/m³ Zement D
112 kg/m³ 0-0,2 mm Sand
102 kg/m³ 0,2-0,5 mm Sand
118 kg/m³ 0,5-1,0 mm Sand
203 kg/m³ 1,0-2,0 Sand
337 kg/m³ 2,0-4,0 Sand
501 kg/m³ 4-8 mm Sand
505 kg/m³ 8-16 mm Sand
152 kg/m³ Wasser
4,56 kg/m³ Betonzusätze

Tabelle 2 , zeigt die Ergebnisse für die Druckfestigkeit von Beton enthaltend diesen Zement zusammen mit dem erfindungsgemäßen Aktivierungssystem im Vergleich zu einem unaktivierten Vergleichszement, hergestellt und gelagert bei 22° C und bei 27° C.

**Tabelle 2:**

| Zement D | Temp. , °C | Na-Sulfat, Gew.-% | Na-Gluconat, Gew.-% | Druckfestigkeit, MPa | | |
|---|---|---|---|---|---|---|
| | | | | 1d | 2d | 28d |
| Vergleich | 20 | 0 | 0 | 8 | 16 | 55 |
| Aktiviert | 20 | 3 | 0,05 | 9 | 23 | 62 |
| Vergleich | 27 | 0 | 0 | 14 | 29 | 66 |
| Aktiviert | 27 | 3 | 0,05 | 24 | 34 | 57 |

Diese Daten zeigen, dass bei einer hydraulischen Zusammensetzung einsprechend der vorliegenden Erfindung signifikante Verbesserungen der Festigkeit insbesondere in frühen Phasen auch bei erhöhten Temperaturen erreicht werden.

## Patentansprüche

1. Hydraulisches Bindemittel enthaltend 25 bis 85 Gew.-% Zementklinker, 0 bis 7 Gew.-%_{;} insbesondere 1 bis 7 Gew.-% CaSO₄ sowie mineralische Zusatzstoffe in einer Menge von insgesamt 15 bis 75 Gew.-%, bezogen auf das hydraulische Bindemittel, **dadurch gekennzeichnet, dass** 1 bis 10 Gew.-% eines dualen Abbindesteuerungssystems enthalten sind, das einen Aktivator und einen Verzögerer umfasst, wobei das Gewichts-Verhältnis von Aktivator zu Verzögerer, bezogen auf die Trockensubstanz, größer als 85:15, insbesondere größer als 90:10, insbesondere größer als 95:5, insbesondere größer als 98:2 gewählt ist, wobei der Aktivator wenigstens ein Alkalimetall-sulphat, insbesondere Na-, K- oder Li-Sulphat, umfasst und der Verzögerer wenigstens eine Verbindung umfasst, ausgewählt aus der Gruppe bestehend aus Zn- und Bleisalzen, Phosphaten, Phosphonaten, insbesondere Phosphonobutantricarbonsäure, Aminomethylenphosphonate, insbesondere Aminotrismethylenphosphonat, Borsäuren, Silicofluoriden, organischen Säuren insbesondere Hydroxycarbonsäuren, insbesondere Gluconsäure, Weinsäure und deren Salze, Zucker und deren Derivate.

2. Hydraulisches Bindemittel nach Anspruch 1, **dadurch gekennzeichnet, dass** das duale Abbindesteuerungssystem in Mengen von 1 bis 7 Gew. -%, insbesondere 2 bis 3 Gew.-%, bezogen auf das hydraulische Bindemittel, eingesetzt ist.

3. Hydraulisches Bindemittel nach Anspruch 1 oder 2, **dadurch gekennzeichnet, dass** der Aktivator weiters wenigstens eine Verbindung ausgewählt aus der Gruppe bestehend aus Polyalkoholen wie z.B. Triisopropanolamin, Glycerin oder Glycolderivaten umfasst.

4. Hydraulisches Bindemittel nach einem der Ansprüche 1 bis 3, **dadurch gekennzeichnet, dass** der Aktivator in Mengen von 1 bis 6 Gew.-%, insbesondere 2 bis 4 Gew.-%, bezogen auf das hydraulische Bindemittel, eingesetzt ist.

5. Hydraulisches Bindemittel nach einem der Ansprüche 1 bis 4, **dadurch gekennzeichnet, dass** als Aktivator Na₂SO₄ eingesetzt ist.

6. Hydraulisches Bindemittel nach einem der Ansprüche 1 bis 5, **dadurch gekennzeichnet, dass** als Verzögerer ein Alkalimetall- und/oder Erdalkalimetallsalz der Gluconsäure, insbesondere Na-Gluconat, eingesetzt ist.

7. Hydraulisches Bindemittel nach einem der Ansprüche 1 bis 6, **dadurch gekennzeichnet, dass** der Verzögerer in einer Menge von 0,01 - 0,5 Gew.-%, insbesondere 0,03 bis 0,06%, bezogen auf das hydraulische Bindemittel, eingesetzt ist.

8. Hydraulisches Bindemittel nach einem der Ansprüche 1 bis 7, **dadurch gekennzeichnet, dass** als mineralische Zusatzstoffe Hüttensand, Flugasche, natürliche Puzzolane, gebrannte Tone, gemahlener Kalkstein, oder Kombinationen davon enthalten sind.

9. Hydraulisches Bindemittel nach einem der Ansprüche 1 bis 8, **dadurch gekennzeichnet, dass** zusätzlich reaktive Tone, insbesondere Metakaolin in Mengen von 1 bis 15 Gew.-%, bezogen auf das hydraulische Bindemittel, enthalten sind.

10. Aktivierungssystem umfassend ein duales Abbindesteuerungssystem mit einem eine Aktivator und einem Verzögerer, wobei das Verhältnis von Aktivator zu Verzögerer, bezogen auf die Trockensubstanz größer als 85:15, insbesondere größer als 90:10, insbesondere größer als 95:5, insbesondere größer als 98:2 gewählt ist, wobei der Aktivator wenigstens einAlkalimetall-Sulphat, insbesondere Na-, K- oder Li-Sulphat, umfasst und der Verzögerer wenigstens eine Verbindung umfasst, ausgewählt aus der Gruppe bestehend aus Zn- und Bleisalzen, Phosphaten, Phosphonaten wie z.B.: Phosphonobutantricarbonsäure, Aminomethylenphosphonate Borsäuren, licofluoriden, organischen Säuren insbesondere Hydroxycarbonsäuren wie z.B. Gluconsäure, Weinsäure und deren Salze, Zucker und deren Derivate.

11. Aktivierungssystem nach Anspruch 10, **dadurch gekennzeichnet, dass** der Aktivator weiters wenigstens eine Verbindung ausgewählt aus der Gruppe bestehend aus Polyalkoholen wie z.B. Triisopropanolamin, Glycerin oder Glycolderivaten umfasst.

12. Aktivierungssystem nach Anspruch 10 oder 11, **dadurch gekennzeichnet, dass** als Aktivator Na₂SO₄ eingesetzt ist.

13. Aktivierungssystem nach einem der Ansprüche 10 bis 12, **dadurch gekennzeichnet, dass** der Verzögerer ein Alkalimetall- und/oder Erdalkalimetallsalz der Gluconsäure umfasst.

14. Aktivierungssystem nach einem, der Ansprüche 10 bis 13, **dadurch gekennzeichnet, dass** der Verzögerer Na-Gluconat umfasst.

15. Fertigbetonmischung enthaltend ein hydraulisches Bindemittel nach einem der Ansprüche 1 bis 9.

16. Formteil hergestellt unter Verwendung eines hydraulischen Bindemittels oder eines Aktivierungssystems nach einem der Ansprüche 1 bis 14.

## Claims

1. A hydraulic binder containing 25 to 85 wt% of cement clinker, 0 to 7 wt%, in particular 1 to 7 wt%, of CaSO₄, and mineral additives, in amounts of a total of 15 to 75 wt%, based on the hydraulic binder, **characterized in that** 1 to 10 wt% of a dual setting control system is contained, which comprises an activator and a retarder, wherein the weight ratio of activator to retarder, based on the dry substance, is selected to be greater than 85:15, in particular greater than 90:10, in particular greater than 95:5, in particular greater than 98:2, wherein the activator comprises at least one alkali metal sulfate, in particular Na-, K- or Li-sulfate, and the retarder comprises at least one compound selected from the group consisting of Zn and lead salts, phosphates, phosphonates, in particular phosphonobutane-tri-carboxylic acid, aminomethylene phosphonate, in particular amino-tris-methylene phosphonate, boric acids, silicofluorides, organic acids, in particular hydroxycarboxylic acids, in particular gluconic acid, tartaric acid, and salts thereof, sugars and derivatives thereof.

2. A hydraulic binder according to claim 1, **characterized in that** the dual setting control system is used in amounts of from 1 to 7 wt%, in particular 2 to 3 wt%, based on the hydraulic binder.

3. A hydraulic binder according to claim 1 or 2, **characterized in that** the activator further comprises at least one compound selected from the group consisting of polyalcohols such as, e.g., triisopropanolamine, glycerol or glycol derivatives.

4. A hydraulic binder according to any one of claims 1 to 3, **characterized in that** the activator is used in amounts of from 1 to 6 wt%, in particular 2 to 4 wt%, based on the hydraulic binder.

5. A hydraulic binder according to any one of claims 1 to 4, **characterized in that** Na₂SO₄ is used as an activator.

6. A hydraulic binder according to any one of claims 1 to 5, **characterized in that** an alkali metal salt and/or earth alkali metal salt of gluconic acid, in particular Na gluconate, is used as a retarder.

7. A hydraulic binder according to any one of claims 1 to 6, **characterized in that** the retarder is used in an amount of from 0.01 - 0.5 wt%, in particular 0.03 - 0.06 wt%, based on the hydraulic binder.

8. A hydraulic binder according to any one of claims 1 to 7, **characterized in that** slag sand, fly ash, natural puzzolans, burnt clays, ground limestone, or combinations thereof are used as mineral additives.

9. A hydraulic binder according to any one of claims 1 to 8, **characterized in that** reactive clays, in particular metakaolin, are additionally contained in amounts of from 1 to 15 wt%, based on the hydraulic binder.

10. An activating system comprising a dual setting control system including an activator and a retarder, wherein the ratio of activator to retarder is selected to be greater than 85:15, in particular greater than 90:10, in particular greater than 95:5, in particular greater than 98:2, based on the dry substance, wherein the activator comprises at least one alkali metal sulfate, in particular Na-, K- or Li-sulfate, and the retarder comprises at least one compound selected from the group consisting of Zn and lead salts, phosphates, phosphonates such as phosphonobutane-tri-carboxylic acid, aminomethylene phosphonate, boric acids, silicofluorides, organic acids, in particular hydroxycarboxylic acids such as gluconic acid, tartaric acid, and salts thereof, sugars and derivatives thereof.

11. An activating system according to claim 10, **characterized in that** the activator further comprises at least one compound selected from the group consisting of polyalcohols such as, e.g., triisopropanolamine, glycerol or glycol derivatives.

12. An activating system according to claim 10 or 11, **characterized in that** Na₂SO₄ is used as an activator.

13. An activating system according to any one of claims 10 to 12, **characterized in that** the retarder comprises an alkali metal salt and/or earth alkali metal salt of gluconic acid.

14. An activating system according to any one of claims 10 to 13, **characterized in that** the retarder comprises Na gluconate.

15. A ready-mix concrete mixture comprising a hydraulic binder according to any one of claims 1 to 9.

16. A molded article produced using a hydraulic binder or an activating system according to any one of claims 1 to 14.

## Revendications

1. Liant hydraulique contenant 25 à 85 % en poids de clinker de ciment, 0 à 7 % en poids, en particulier 1 à 7 % en poids de CaSO₄ ainsi que des additifs minéraux en une quantité de 15 à 75 % en poids au total, par rapport au liant hydraulique, **caractérisé en ce que** sont contenus 1 à 10 % en poids d'un système régulateur de prise binaire, qui comprend un activateur et un retardateur, dans lequel le rapport pondéral d'activateur à retardateur, par rapport à la matière sèche, est choisi supérieur à 85:15, en particulier supérieur à 90:10, en particulier supérieur à 95:5, en particulier supérieur à 98:2, dans lequel l'activateur comprend au moins un sulfate de métal alcalin, en particulier du sulfate de Na, K ou Li, et le retardateur comprend au moins un composé choisi dans le groupe constitué par les sels de zinc et de plomb, les phosphates, les phosphonates, en particulier l'acide phosphono-butanetricarboxylique, les phosphonates d'aminométhylène, en particulier le phosphonate d'aminotrisméthylène, les acides boriques, les silicofluorures, les acides organiques en particulier les acides hydroxycarboxyliques, en particulier l'acide gluconique, l'acide d-tartrique et leurs sels, les sucres et leurs dérivés.

2. Liant hydraulique selon la revendication 1, **caractérisé en ce que** le système régulateur de prise binaire est utilisé en des quantités de 1 à 7 % en poids, en particulier 2 à 3 % en poids, par rapport au liant hydraulique.

3. Liant hydraulique selon la revendication 1 ou 2, **caractérisé en ce que** l'activateur comprend en outre au moins un composé choisi dans le groupe consistant en polyalcools, par exemple la triisopropanolamine, le glycérol ou des dérivés de glycol.

4. Liant hydraulique selon l'une quelconque des revendications 1 à 3, **caractérisé en ce que** l'activateur est utilisé en des quantités de 1 à 6 % en poids, en particulier 2 à 4 % en poids, par rapport au liant hydraulique.

5. Liant hydraulique selon l'une quelconque des revendications 1 à 4, **caractérisé en ce qu'**on utilise comme activateur Na₂SO₄.

6. Liant hydraulique selon l'une quelconque des revendications 1 à 5, **caractérisé en ce qu'**on utilise comme retardateur un sel de métal alcalin et/ou de métal alcalino-terreux de l'acide gluconique, en particulier le gluconate de sodium.

7. Liant hydraulique selon l'une quelconque des revendications 1 à 6, **caractérisé en ce que** le retardateur est utilisé en une quantité de 0,01 - 0,5 % en poids, en particulier 0,03 à 0,06 %, par rapport au liant hydraulique.

8. Liant hydraulique selon l'une quelconque des revendications 1 à 7, **caractérisé en ce que** comme additifs minéraux sont contenu(e)s du sable métallurgique, des cendres volantes, des pouzzolanes naturelles, des argiles calcinées, de la pierre à chaux broyée, ou des combinaisons de ceux-ci.

9. Liant hydraulique selon l'une quelconque des revendications 1 à 8, **caractérisé en ce que** sont en outre contenues des argiles réactives, en particulier du métakaolin, en des quantités de 1 à 15 % en poids, par rapport au liant hydraulique.

10. Système d'activation comprenant un système régulateur de prise binaire comportant un activateur et un retardateur, dans lequel le rapport d'activateur à retardateur, par rapport à la matière sèche est choisi supérieur à 85:15, en particulier supérieur à 90:10, en particulier supérieur à 95:5, en particulier supérieur à 98:2, dans lequel l'activateur comprend au moins un sulfate de métal alcalin, en particulier du sulfate de Na, K ou Li, et le retardateur comprend au moins un composé choisi dans le groupe consistant en les sels de zinc et de plomb, les phosphates, les phosphonates, par exemple : l'acide phosphonobutanetricarboxylique, les phosphonates d'aminométhylène, les acides boriques, les silicofluorures, les acides organiques en particulier les acides hydroxycarboxyliques, par exemple l'acide gluconique, l'acide tartrique et leurs sels, sucres et leurs dérivés.

11. Système d'activation selon la revendication 10, **caractérisé en ce que** l'activateur comprend en outre au moins un composé choisi dans le groupe consistant en polyalcools, par exemple la triisopropanolamine, le glycérol ou des dérivés de glycol.

12. Système d'activation selon la revendication 10 ou 11, **caractérisé en ce qu'**on utilise comme activateur Na₂SO₄.

13. Système d'activation selon l'une quelconque des revendications 10 à 12, **caractérisé en ce que** le retardateur comprend un sel de métal alcalin et/ou de métal alcalino-terreux de l'acide gluconique.

14. Système d'activation selon l'une quelconque des revendications 10 à 13, **caractérisé en ce que** le retardateur comprend du gluconate de sodium.

15. Mélange de béton prêt à l'emploi contenant un liant hydraulique selon l'une quelconque des revendications 1 à 9.

16. Pièce moulée produite en utilisant un liant hydraulique ou un système d'activation selon l'une quelconque des revendications 1 à 14.
